# FASCICULE DE BREVET EUROPEEN

(11) **EP 0 798 944 B1**
(45) Date de publication et mention de la délivrance du brevet: **30.05.2001**
(21) Numéro de dépôt: 97460012.4
(22) Date de dépôt: 19.03.1997
(51) Int. Cl.: H04Q 7/24, H04Q 7/38

(54) **Réseau local d'accès à des mobiles**
Lokales Netz mit Zugang zu mobilen Teilnehmern
Local acces network to mobiles

(30) Priorité: 27.03.1996 FR 9604089
(43) Date de publication de la demande: 01.10.1997
(73) Titulaire: FRANCE TELECOM, 75015 Paris (FR)
(72) Inventeur: Quinquis, Jean-Paul, 22700 Perros-Guirec (FR); Roussel, Olivier, 22700 Perros-Guirec (FR); Hue, Laurent, 22300 Lannion (FR)
(74) Mandataire: Maillet, Alain

(56) Documents cités:
- EP-A- 0 679 042
- GOODMAN D J ET AL: "NETWORK CONTROL FOR WIRELESS COMMUNICATIONS" IEEE COMMUNICATIONS MAGAZINE, vol. 30, no. 12, 1 décembre 1992 (1992-12-01), pages 116-124, XP000330095
- SCHWARTZ M: "NETWORK MANAGEMENT AND CONTROL ISSUES IN MULTIMEDIA WIRELESS NETWORKS INTERFACING WIRELESS RADIO WITH "CLEANER" FIBER NETWORKS" IEEE PERSONAL COMMUNICATIONS, vol. 2, no. 3, 1 juin 1995 (1995-06-01), pages 8-16, XP000506578

## Description

La présente invention concerne un réseau local d'accès à des mobiles.

On connaît déjà des réseaux d'accès à des mobiles et on pourra se reporter utilement au document de brevet FR-A-2 714 559 qui décrit un tel réseau constitué d'un double bus sur lequel sont interconnectés, par exemple par l'intermédiaire de noeuds de concentration, des bornes radio auxquelles peuvent se raccorder des stations mobiles dites encore mobiles.

A terme, les communications entre mobiles ou entre un mobile et un autre locuteur ne seront pas seulement phonique mais pourront nécessiter le transport de données représentatives par exemple d'images fixes ou animées qui justifient l'utilisation de réseaux multidébits, voire large bande. Par nature, la technologie ATM (Asynchronous Transfer Mode) assure le transport d'informations de toute nature à des débits variés.

Un premier but de l'invention est de proposer un réseau local d'accès à des mobiles qui supporte cette technologie ATM.

La demande croissante de services de communication entre mobiles a pour effet d'accroître la densité du trafic que doit être en mesure de traiter chaque borne radio du réseau local d'accès Afin d'assurer une meilleure couverture radio des zones urbaines tout en tenant compte des performances nécessairement limitées desdites bornes radio, on est amené à réduire la couverture de chaque borne radio et à proposer des réseaux orientés vers des architectures microcellulaires Néanmoins, ceci pose le problème de la multiplication très significative des procédures de signalisation, notamment lorsque les mobiles passeront de la couverture radio d'une borne vers celle d'une autre borne. Cette multiplication est également provoquée par les phénomènes connus tels que ceux qui sont dits "du coin de rue" ou du "camion qui passe" Les procédures de Transferts Automatiques Intercellulaires (TAI) encore appelées dans le domaine de la technique phase de "hand-over", engendrent des processus de traitement qui risquent de saturer rapidement les organes de commande du réseau terrestre.

Le but de l'invention est donc de proposer un réseau d'accès fondé sur la technologie ATM qui permette de résoudre ce problème particulier grâce à la faculté de ces réseaux de gérer de façon très souple et extrêmement rapide les liens supports identifiés par des connexions virtuelles.

Un réseau local d'accès à des mobiles selon l'invention est du type qui comporte un réseau de distribution constitué d'une pluralité de noeuds, chaque noeud étant relié à un concentrateur auquel est reliée au moins une borne radio prévue pour communiquer avec des mobiles rattachés à ladite borne, au moins un desdits noeuds dudit réseau de distribution étant relié, par l'intermédiaire d'un équipement d'aiguillage, à un commutateur de canaux virtuels.

Afin d'atteindre les buts susmentionnés, il est caractérisé en ce que chaque connexion virtuelle établie entre un mobile et ledit commutateur est identifiée, pour toute la durée de la communication et quelle que soit la borne radio à laquelle est rattaché ledit mobile, par un unique identificateur de canal virtuel pour les cellules usagers et un unique identificateur de canal virtuel pour les cellules de signalisation, et en ce que, durant les phases de hand-over pendant lesquelles un mobile est rattaché à deux bornes, lesdites deux bornes peuvent échanger des informations qui sont alors véhiculées par des cellules portant l'identificateur du canal de signalisation alloué audit mobile.

Selon une autre caractéristique de l'invention, lesdites informations qui sont transmises entre lesdites deux bornes pendant lesdites phases de hand-over sont véhiculées par des cellules portant l'identificateur du canal de signalisation alloué audit mobile et un identificateur de conduit virtuel correspondant à un conduit virtuel commun défini dans le réseau de distribution selon une topologie de type point à point avec fusion dans le sens montant et point à multipoint avec diffusion dans le sens descendant

Selon une autre caractéristique de l'invention, lesdites informations qui sont transmises entre lesdites deux bornes pendant lesdites phases de hand-over sont véhiculées par des cellules portant l'identificateur du canal de signalisation alloué audit mobile et un identificateur de conduit virtuel correspondant à un conduit virtuel commun défini dans le réseau de distribution selon une topologie en anneau virtuel

Ainsi, contrairement aux réseaux d'accès à des mobiles connus, le processus de traitement des phases de hand-over est distribué dans le réseau.

Selon une autre caractéristique de l'invention, chaque concentrateur accède audit anneau virtuel sans réservation de bande passante ou au contraire avec réservation de bande passante. Dans ce dernier cas, ledit réseau comporte un organe gestionnaire de la bande passante prévu pour émettre des cellules de réservation au débit correspondant à la bande à réserver, un concentrateur pour émettre un message capturant une au moins desdites cellules et la ou les substituant par une ou plusieurs cellules contenant ledit message, un concentrateur pour recevoir un message substituant la ou lesdites cellules contenant ledit message par une ou plusieurs cellules de réservation.

Selon une autre caractéristique de l'invention, chaque connexion virtuelle établie pour une communication est en outre identifiée par un premier identificateur de conduit virtuel lorsque ladite communication est locale et concerne donc deux mobiles rattachés à une ou des bornes dudit réseau et par un second identificateur de conduit virtuel lorsque ladite communication est sortant ou entrante et concerne donc deux interlocuteurs dont l'un seulement est un mobile rattaché à une ou des bornes dudit réseau.

Selon une autre caractéristique de l'invention, durant les phases de hand-over, les deux bornes auxquelles est rattaché le mobile peuvent effectuer des marquages et effacer lesdits marquages dans les concentrateurs auxquels elles sont respectivement reliées.

Selon une autre caractéristique de l'invention, des serveurs accessibles par des liaisons permanentes de type conduit virtuel sont interconnectés à l'équipement d'aiguillage. Parmi lesdits serveurs, est prévu un serveur de macrodiversité actif sur chaque connexion virtuelle montante. De même, parmi lesdits serveurs, est prévu un transcodeur effectuant un transcodage de format des cellules portant un identificateur de conduit virtuel identifiant une communication sortante ou entrante.

L'invention concerne également l'architecture dudit réseau local d'accès. Par exemple, lesdits noeuds dudit réseau de distribution sont reliés deux à deux de manière à former un anneau simple ou double contra-rotatif. Lesdits noeuds dudit réseau de distribution sont arrangés en segments doubles contra-parallèles dont une des extrémités est reliée au commutateur de canaux virtuels. Au moins un desdits segments peut comprendre des sous-segments dont une des extrémités est reliée audit segment par l'intermédiaire d'un répéteur.

Selon une caractéristique avantageuse, un réseau local d'accès à des mobiles selon l'invention est constitué d'une pluralité de noeuds de concentration et d'un centre de commutation et de gestion, chaque noeud de concentration étant constitué d'un concentrateur auquel peut être reliée une pluralité de bornes radio et un noeud relié audit concentrateur, ledit noeud étant un noeud du réseau de distribution, ledit centre de commutation et de gestion comprenant ladite équipement d'aiguillage, ledit commutateur et au moins un noeud du réseau de distribution. Ledit centre de commutation et de gestion peut comprendre en outre au moins un serveur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels.
la Fig. 1 est un schéma synoptique d'un réseau local d'accès selon l'invention,
la Fig 2 illustre la gestion de la mobilité effectué au niveau de l'équipement d'aiguillage d'un réseau local d'accès selon l'invention,
les Figs 3a à 2c illustrent le transcodage effectué au niveau de l'équipement d'aiguillage d'un réseau local d'accès selon l'invention,
les Figs. 4a à 4b montrent respectivement des architectures différentes de réseaux locaux d'accès selon l'invention,
le Figs. 5a et 5b montrent des détails de constitution des architectures respectivement montrées aux Figs. 4a et 4b,
les Figs. 6a et 6b montrent respectivement un noeud de concentration et un centre de commutation et de gestion selon l'invention et,
les Figs. 7a, 7b et 8a et 8b montrent respectivement des topologies de réseaux locaux d'accès selon l'invention.

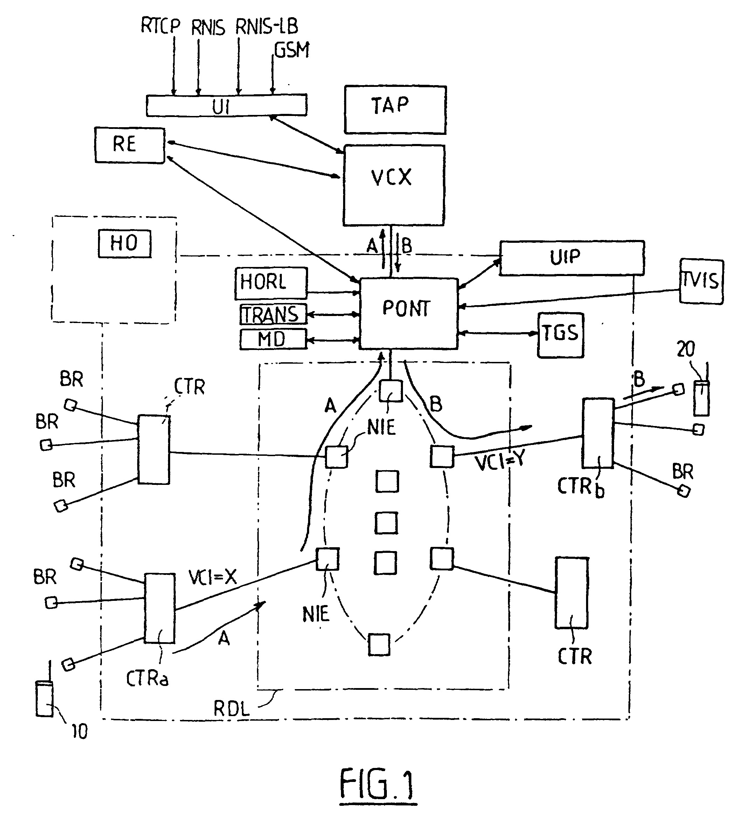

Le réseau local d'accès au mobiles RLAM représenté à la Fig. 1 est constitué d'un ensemble de concentrateurs CTR auxquels est connectée une pluralité de bornes radio BR et qui sont respectivement reliés, en amont, à des noeuds d'insertion/extraction NIE d'un réseau de distribution interne RDL

Les noeuds NIE sont interconnectés selon des topologies qui seront décrites ci-après Comme on le verra par la suite, le réseau interne RDL assure des fonctions de distribution et de routage par conduits virtuels VP.

Le réseau RLAM comporte encore un équipement d'aiguillage PONT qui est relié, d'une part, à un noeud d'insertion/extraction NIE du réseau RDL et, d'autre part, à des serveurs et à un commutateur VCX L'équipement d'aiguillage PONT est destiné à assurer l'interface entre, d'une part, le commutateur VCX et/ou les serveurs et, d'autre part, le réseau de distribution RDL Comme on le comprendra par la suite, il est du type brasseur de conduits virtuels VP

Le commutateur VCX est relié, par l'intermédiaire d'une unité d'interfonctionnement UI, à des réseaux externes du type RTCP, RNIS, RNIS-LB ou GSM, ou directement à d'autres réseaux externes RE du type réseaux d'accès à des mobiles RLAM identiques à celui de l'invention Il assure, dans le plan usager, la commutation des canaux virtuels VC afin d'assurer l'établissement, d'une part, des connexions locales entre deux mobiles attachés au même réseau d'accès RLAM et, d'autre part, des connexions sortantes entre un mobile du réseau RLAM et un abonné d'un réseau externe RE ou d'un autre réseau accessible via l'unité d'interfonctionnement UI

Il est relié, pour son fonctionnement dans le plan de commande, à une unité de traitement des appels locaux et externes TAP.

On notera que ce commutateur VCX n'est pas spécifique d'un réseau d'accès RLAM et peut ainsi être mis en oeuvre à partir d'un matériel du commerce.

Le réseau RLAM comporte encore un ensemble de serveurs directement interconnectés à l'équipement d'aiguillage PONT et accessibles, via le réseau de distribution RDL et le commutateur VCX, par des liaisons permanentes ATM de type conduit virtuel VP.

Ces serveurs comprennent un opérateur de macrodiversité MD qui est utilisé pendant les phases de hand-over et un serveur de hand-over HO qui, comme on le verra par la suite, est distribué dans les bornes BR ou les concentrateurs CTR contrairement aux solutions connues

Les autres serveurs comprennent, si cela s'avère nécessaire compte tenu des protocoles mis en présence, un serveur transcodeur TRANS qui effectue les fonctions d'adaptation entre des cellules ATM pour les rendre compatibles avec la norme aux niveaux du plan d'usager, un serveur HORL de distribution des signaux de synchronisation des bornes radio BR, une unité d'interfonctionnement des protocoles UIP assurant les adaptations éventuelles entre les procédures de traitement des appels vues par les mobiles et celles vues par le commutateur VCX. L'unité UIP n'est pas nécessaire dans le cas d'un totale compatibilité sur le plan de commande.

Le réseau RLAM comprend encore un terminal de gestion et de supervision TGS qui permet à un opérateur d'administrer le réseau local RDL, c'est-à-dire de gérer sa configuration, d'observer son bon fonctionnement, de faire de l'observation de trafic, de faire de la mesure de qualité de service, etc

On notera qu'il est également possible de prévoir un terminal de visualisation TVIS qui, couplé au terminal de gestion et de supervision TGS, permet de visualiser sur un écran les processus qui se déroulent dans le réseau de distribution RDL, tels que le suivi d'un communication lors de ses phases de hand-over.

Chaque concentrateur CTR effectue, dans le sens montant, (mobiles vers réseau) la concentration des flux en provenance des bornes radio BR auxquelles il est connecté et, dans le sens descendant, effectue le démultiplexage des flux qui arrivent du réseau RDL et qui sont destinés aux bornes BR auxquelles il est connecté. Comme on le verra par la suite, il aiguille également chaque connexion virtuelle vers l'une ou l'autre des bornes BR sur la base de l'analyse du champ VCI des en-têtes des cellules ATM circulant dans le réseau RLAM

Chaque concentrateur CTR prend également en charge la création et l'effacement de chaque connexion virtuelle et ce, sous la commande d'un protocole qui est géré par les bornes BR auxquelles il est connecté

Par ailleurs, chaque concentrateur CTR supervise son bon fonctionnement et ce sous la commande du terminal de gestion et supervision TGS.

On notera que les messages qui correspondent aux fonctions qui viennent d'être décrites sont transportés par le réseau de distribution RDL lui-même, sous la forme de cellules dites cellules OAM.

Selon une caractéristique de l'invention, l'identificateur de canal virtuel VPI permet de discriminer le trafic usager, la signalisation interne au niveau du réseau RLAM, la signalisation de bout en bout, etc. L'équipement d'aiguillage PONT traite quant à lui les connexions au niveau des liaisons de conduit virtuel VP et joue ainsi le rôle d'aiguilleur entre le réseau de distribution RDL, le commutateur VCX et les différents serveurs MD, TRANS, UIP, TGS, HO, etc L'aiguillage des cellules ATM vers l'un des serveurs ou vers le commutateur VCX est donc effectué, dans l'équipement d'aiguillage PONT, sur la base de l'analyse de l'identificateur de conduit virtuel VPI présent dans le champ de même nom VPI desdites cellules

On notera qu'il est possible d'interconnecter deux réseaux RLAM tel que celui qui est décrit ici et ce au niveau des deux équipements d'aiguillage PONT respectifs

On va décrire maintenant les techniques d'identification et de gestion des canaux virtuels VP qui transportent les flux d'usagers. On notera qu'il n'est pas traité pour l'instant des canaux de signalisation qui transportent les cellules des flux de signalisation mentionnés ci-dessus

Sur la Fig. 1, on a schématisé avec des flèches A et B le concept de connexion entre deux mobiles 10 et 20, cette connexion étant dite locale dans la mesure où elle ne sort pas du réseau RLAM. La partie de la connexion montante est marquée par la flèche A et est identifiée par un identificateur de canal virtuel VCI égal, par exemple, à X, alors que l'identificateur de canal virtuel VCI identifiant la partie descendante de la connexion, marquée par la flèche B, est égal à Y. C'est le commutateur VCX qui effectue la traduction des identificateurs de canaux VCI pour la communication.

La connexion entre les deux mobiles 10 et 20 est effectuée initialement dans le commutateur VCX et elle peut, dans le réseau RDL, évoluer consécutivement aux déplacements des mobiles.

La gestion des identificateurs VCI est globale du fait qu'il n'est fait de traduction de ces identificateurs VCI que dans le commutateur VCX. Toutes les communications en cours portent donc des numéros d'identificateurs VCI différents les uns des autres.

Chaque communication est bidirectionnelle. Si l'on considère la partie montante A de cette communication, elle est donc constituée d'une connexion montante et d'une connexion descendante. Ces connexions sont identifiées par le même numéro d'identificateur VCI dont la valeur est, dans notre exemple, égal à X. Par contre, comme il a déjà été mentionné ci-dessus, les numéros d'identificateur VCI ont des valeurs X et Y différentes aux deux extrémités d'une même communication, que celle-ci soit locale ou sortante.

Les valeurs X et Y des identificateurs VCI sont allouées par le serveur TAP au cours de la phase d'établissement de la connexion.

Un numéro d'identification de conduit virtuel VPI est attribué à un réseau RLAM et est fixé une fois pour toute à la mise en service du réseau RLAM. Ainsi, toutes les communications locales seront canalisées dans le conduit VP portant cet identificateur VPI Dans le cas où le mobile de réception est externe au réseau RLAM, l'identificateur de conduit virtuel VPI sera différent de celui du réseau RLAM.

Selon une caractéristique essentielle de l'invention, ces identificateurs VCI et VPI sont conservés pendant toute la durée de la communication quelles que soient les bornes BR sur lesquelles sont rattachés les deux mobiles 10 et 20 Ainsi, le lien entre la partie montante de la connexion et sa partie descendante restera établi dans le commutateur VCX pendant toute la durée de la communication

Ainsi, la partie montante A de la connexion est une liaison point à point qui converge vers le commutateur VCX. Elle est identifiée par son identificateur VCI dans le concentrateur CTRa et est canalisée dans le réseau de distribution RDL et dans l'équipement d'aiguillage PONT dans un conduit virtuel VP portant, soit l'identificateur VPI associé au réseau RLAM s'il s'agit d'une connexion locale, soit un autre identificateur VPI s'il s'agit d'une connexion sortante vers un réseau externe Quant à la partie descendante B de la connexion, elle est diffusée à l'intérieur d'un arbre de diffusion de conduits VP construit sur le réseau de distribution RDL et identifié par, soit le identificateur VPI associé au réseau RLAM s'il s'agit d'une connexion locale, soit un autre identificateur VPI s'il s'agit d'une connexion entrante issue d'un autre réseau. Les connexions descendantes sont filtrées dans chacun des concentrateurs CTR sur la base des champs d'identificateur VCI portés par les cellules concernées.

L'établissement initial de la connexion s'effectue par marquage dans le concentrateur CTRa concerné pour la partie montante A et dans le concentrateur CTRb concerné pour la partie descendante B. Tant que le ou les mobiles concernés sont toujours rattachés aux mêmes bornes, ce marquage n'est pas modifié. Par contre, lorsque un mobile se déplace et passe d'un rattachement d'une borne BR à une nouvelle borne BR, un nouveau marquage est effectué, par la nouvelle borne BR et dans le concentrateur CTR auquel est reliée cette nouvelle borne BR, pour rediriger la communication vers cette nouvelle borne alors que l'ancienne borne BR, par effacement du marquage jusqu'ici existant dans le concentrateur CTR auquel elle est reliée, libère la connexion dans ce concentrateur CTR. Cet effacement du marquage est effectué à l'issue d'une procédure de hand-over pendant laquelle le mobile est rattaché à deux bornes BR et est connecté à deux canaux virtuels VC. Pendant cette phase de hand-over, c'est l'opérateur de macrodiversité MD qui différentie ces deux canaux virtuels, par exemple par leur qualité, et n'en garde qu'un.

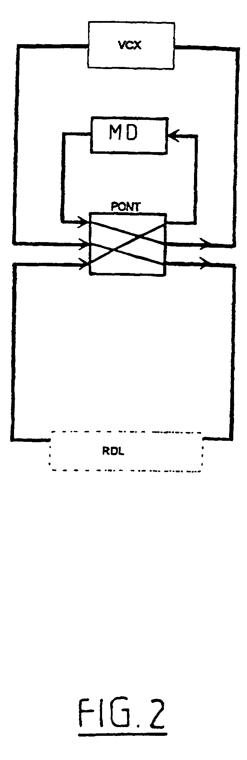

On a représenté à la Fig 2 un schéma synoptique illustrant la connexion de l'opérateur de macrodiversité MD. On a considéré le cas ici d'une communication locale entre deux mobiles rattachés au même réseau RLAM. On peut constater sur cette Fig. 2 que la liaison montante (mobile vers commutateur) est dirigée, dans l'équipement PONT, vers l'entrée de l'opérateur MD dont la sortie est dirigée, toujours dans l'équipement PONT, vers le commutateur VCX. Quant à la liaison descendante (commutateur vers mobile), elle est directe. Ainsi, l'opérateur MD est actif que sur les seules liaisons montantes.

Les mobiles ne sont pas nécessairement compatibles avec la technologie ATM. Les cellules ATM contenant les informations usagers issues des mobiles en communication peuvent être très probablement différentes de celles qui ont été normalisées pour le transport de la téléphonie dans le futur réseau large bande.

Les normes de codage peuvent être différentes, par exemple dues à une compression des données plus importante pour la radiotéléphonie que pour le réseau ATM.

La différence peut venir également du fait que le traitement de la macrodiversité en ATM nécessite que des informations complémentaires soient insérées dans les cellules : par exemple le codage de la qualité du contenu mesuré à partir de critères de propagation radio, des numéros de séquencement permettant la comparaison sur des cellules homologues, etc.

On notera que ces différences sont sans importance si la connexion reste à l'intérieur du réseau RLAM, c'est-à-dire lorsque la communication est établie entre 2 mobiles qui sont sous la zone de couverture d'un unique réseau RLAM

Dès l'instant où la connexion doit sortir du réseau local RLAM, par le commutateur VCX, pour aller vers un réseau externe ATM, se pose le problème de l'intéropérabilité Il devient ainsi indispensable de rendre compatible les cellules qui circulent dans le réseau RLAM avec la structure normalisée qui est celle du réseau ATM

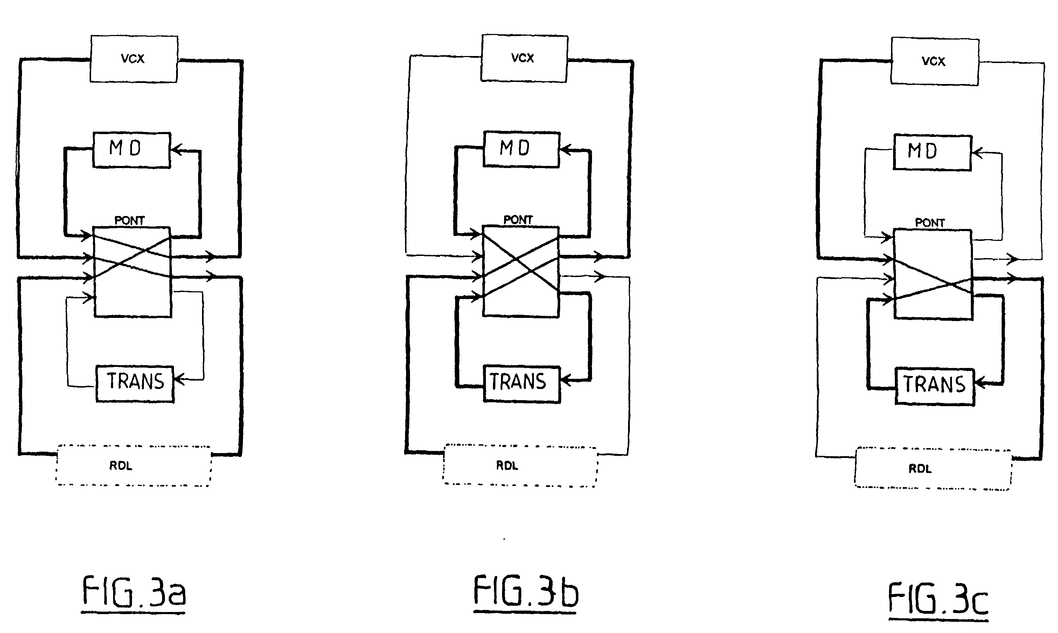

Pour ce faire, on a prévu un transcodeur TRANS qui est connecté à l'équipement d'aiguillage PONT dont le fonctionnement est explicité au regard des Figs. 3a à 3c. Sur ces Figs. 3a à 3c, est également présent l'opérateur de macrodiversité MD.

La Fig 3a concerne le cas d'une communication locale et montre les liaisons respectivement dans le sens montant (mobile vers commutateur) et dans le sens descendant (commutateur vers mobile) Comme on le peut constater, les liaisons réalisées dans l'équipement d'aiguillage PONT ne transitent par le transcodeur TRANS.

Les Figs. 3b et 3c concernent le cas de communications sortantes, respectivement dans le sens montant (mobile vers commutateur) et dans le sens descendant (commutateur vers mobile) Comme on le peut constater, pour le sens montant, les liaisons dans l'équipement d'aiguillage PONT sont réalisées de manière à ce que la connexion montante soit commutée sur l'entrée de l'opérateur de macrodiversité MD, la sortie de ce dernier vers l'entrée du transcodeur TRANS, la sortie du transcodeur TRANS étant commutée sur la sortie de l'équipement d'aiguillage PONT qui est reliée au commutateur VCX. Pour le sens descendant, les liaisons dans l'équipement d'aiguillage PONT sont réalisées de manière à ce que la connexion descendante soit commutée sur l'entrée du transcodeur TRANS, la sortie du transcodeur TRANS étant commutée sur la sortie du équipement d'aiguillage PONT qui est reliée au réseau RDL. On notera que la liaison descendante ne transite pas là non plus dans l'opérateur de macrodiversité MD.

En transitant par le transcodeur TRANS, les cellules sont soumises à une conversion du format du réseau externe vers le format du réseau local et réciproquement.

Le choix de traverser ou non le transcodeur TRANS est réalisé par analyse du champ contenu dans l'en-tête des cellules ATM portant l'identificateur de conduit virtuel VPI puisque la valeur prise par cet identificateur détermine l'appartenance des cellules à un trafic usager local ou à un trafic usager sortant (ou entrant).

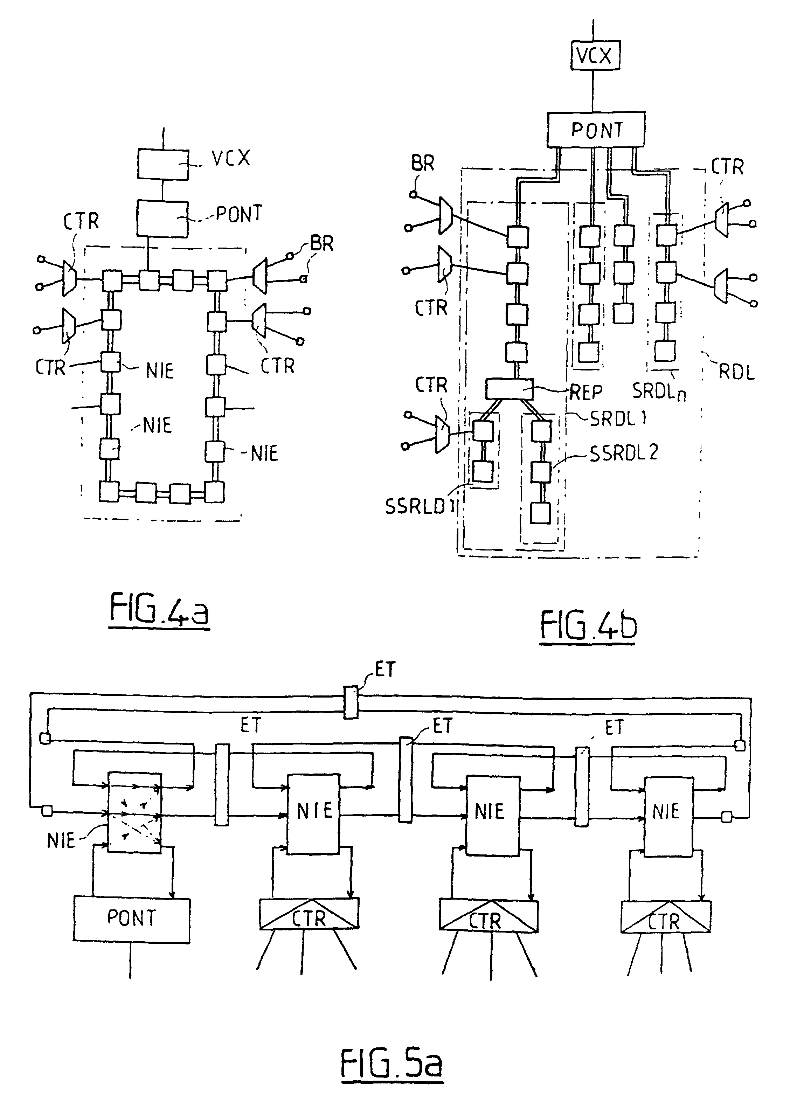

On a représenté aux Figs 4a à 4b deux topologies différentes de réseau de distribution RDL. Ces topologies de réseau sont dites respectivement en boucle à double anneau contra-rotatif et en segment à double bus Ces réseaux de base sont développés autour d'une même entité de base qu'est un noeud d'insertion/extraction NIE arrangé selon différentes topologies, ce qui permet d'offrir un maximum de souplesse pour la mise en place sur site d'une structure d'interconnexion des bornes radio BR et permet, aux responsables de l'ingénierie des réseaux d' adapter au mieux l'architecture physique du réseau de distribution RDL à la topographie des lieux

De plus, ces réseaux de base peuvent être combinés et assemblés de diverses façons pour construire, à la demande, tout type d'architectures de réseaux de distribution, ce qui augmente leur souplesse de mise en oeuvre.

A la Fig. 4a, les noeuds d'insertion/extraction sont reliés entre eux de manière à former entre eux un anneau à double anneau contra-rotatif qui est représenté plus en détail à la Fig. 5a.

A Fig 5a, le double anneau contrarotatif représenté est constitué de quatre noeuds d'insertion/extraction NIE. Comme on peut le constater sur cette Fig., chaque noeud NIE comporte trois entrées dont deux appartiennent respectivement aux premier et second anneaux, la troisième étant reliée à la sortie d'un concentrateur CTR ou, pour l'un, à la sortie du équipement d'aiguillage PONT Il comporte également trois sorties dont l'une, appartenant au premier anneau, est reliée à l'entrée correspondante du noeud NIE suivant, dont une autre, appartenant au second anneau, est reliée à l'entrée correspondante du noeud NIE précédent, et dont la dernière est reliée à l'entrée d'un concentrateur CTR ou, pour l'un des noeuds NIE, à l'entrée du équipement d'aiguillage PONT On a représenté par des flèches dans le premier noeud NIE, les diverses connexions possibles entre les entrées et les sorties d'un noeud NIE d'un tel réseau RDL

On notera que des équipements de transmission ET assurent la qualité des transferts lorsque les noeuds NIE sont géographiquement distribués

On notera également qu'il pourrait être mis en place en anneau simple

A la Fig 4b, le réseau de distribution RDL est subdivisé en sous-réseaux SRDL1 à SRDLn respectivement reliés à l'équipement d'aiguillage PONT. Chaque sous-réseau SRDLi est constitué d'un segment de noeuds NIE auxquels sont respectivement reliés des concentrateurs CTR. Certain sous-réseau (ici le sous-réseau SRDL1) peuvent eux aussi être subdivisés en sous-sous-réseaux SSRDLj dont les têtes sont respectivement reliées à un répéteur REP en queue d'un segment

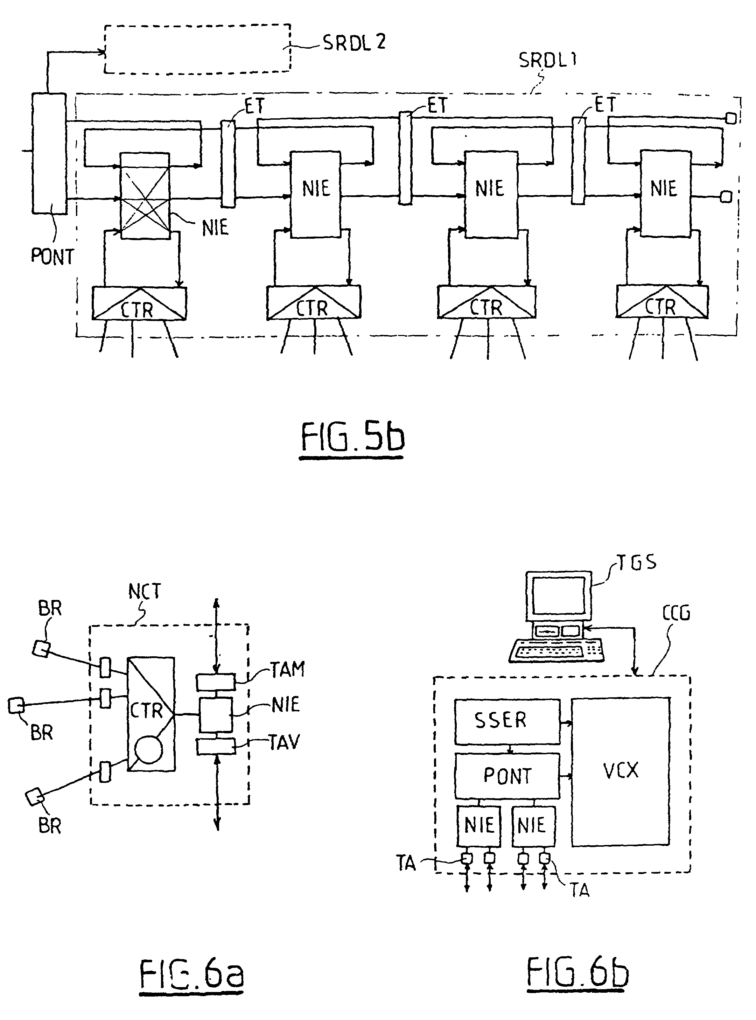

A la Fig 5b, on a représenté deux segments SRDLI et SRDL2 d'un réseau de distribution RDL dont l'un seulement SRDL1 est détaillé. Ce dernier comporte quatre noeuds NIE qui sont reliés entre eux de manière à former deux bus contra-parallèles. La tête de chaque segment est reliée à l'équipement d'aiguillage PONT On a représenté, comme à la Fig. 5a, les connexions possibles dans le premier noeud NIE Ce réseau se différentie de celui qui est représenté à la Fig 5a en ce qu'il est en quelque sorte un bus ouvert. Dans ce type de réseau RDL, l'équipement d'aiguillage PONT effectue le transit des cellules par conduits virtuels VP entre les différents segments SRDLi. On notera que les segments SRDLi peuvent avoir des longueurs différentes entre eux

Un des avantages du réseau de distribution en segments est le fait qu'il puisse être étendu aussi bien dans le sens transversal en ajoutant des segments que dans le sens longitudinal en augmentant le nombre de noeuds d'insertion/extraction NIE par segments On rappelle qu'un segment peut lui-même être divisé en sous-segments en insérant un noeud répéteur REP

On notera que d'autres combinaisons associant le modèle en boucle et le modèle en segment sont envisageables.

On notera également que, du fait que le routage des informations sur le réseau de distribution RDL est effectué à travers des conduits virtuels VP respectivement attribués au trafic usager et à la signalisation, les équipements aux extrémités du réseau local que sont les mobiles, les bornes radio BR et le commutateur VCX, ignorent complètement la topologie physique du réseau de distribution RDL Ainsi, l'unité de traitement des appels TAP affecte à une connexion virtuelle un couple d'identificateurs de conduit VPI et de canal VCI quelle que soit la topologie initiale du réseau de distribution RDL et quelles que soient les modifications de structure et de configuration qui lui sont apportées

La configuration des conduits virtuels VP d'un réseau de distribution RDL est avantageusement effectuée dès la mise en service du réseau RLAM Cette configuration consiste à créer les connexions virtuelles VP qui supporteront les canaux de signalisation et les canaux dans lesquels seront acheminés les trafics usagers. Ces canaux sont en point à point dans le sens montant concentrateurs CTR vers équipement d'aiguillage PONT pour fusionner dans ce dernier et point à multipoint dans le sens descendant de manière à diffuser vers les concentrateurs CTR.

Au moyen de commandes spécifiques et appropriées sur le terminal de gestion TGS, l'administrateur du réseau RLAM peut modifié cette configuration. Ceci peut être nécessaire notamment en cas de modifications ou de défaillances d'un équipement du réseau RDL.

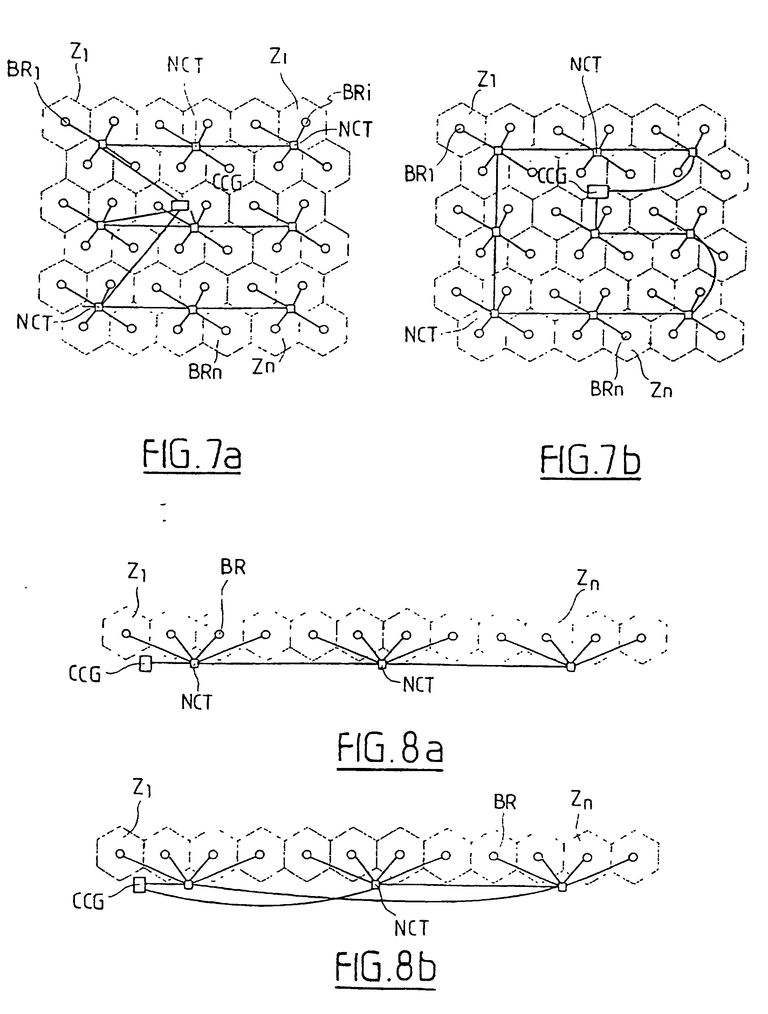

Selon un mode de réalisation de l'invention, l'architecture d'un réseau RLAM est découpée en deux types d'équipements que l'on nomme par la suite noeud de concentration NCT et centre de commutation et de gestion CCG que l'on a respectivement représentés aux Figs 6a et 6b

Le noeud de concentration NCT représenté à la Fig. 6a est constitué d'un concentrateur CTR, d'un noeud NIE relié, d'une part, au concentrateur CTR et, d'autre part, à des équipements de transmission amont et aval TAV et TAM. Les structures de ces équipements et du noeud NIE dépendent de la topologie de réseau de distribution mise en oeuvre Un noeud de concentration NCT est avantageusement autonome en terme d'énergie et il est administrable à distance, via le réseau de distribution RDL à partir du centre de commutation et de gestion CCG.

Le centre de commutation et de gestion CCG représenté à la Fig. 6b est constitué des serveurs mentionnés ci-dessus, reliés à l'équipement d'aiguillage PONT et au commutateur VCX L'équipement d'aiguillage PONT est également relié au commutateur VCX. Il comporte encore deux noeuds d'insertion/extraction NIE respectivement reliés en amont à l'équipement d'aiguillage PONT et an aval a des équipements de transmission TA. On notera qu'un centre CCG est unique pour un réseau RML On notera que le nombre de noeuds NIE dépend de la topologie du réseau de distribution RDL selon qu'il comprend un ou plusieurs sous-réseaux SRDLi.

On a également représenté le terminal de gestion et de supervision TGS relié au centre CCG Ces deux équipements sont avantageusement situé physiquement au même endroit

On notera qu'il résulte de la découpe du réseau RLAM en deux types d'équipements à savoir un noeud de concentration NCT et un centre de commutation de gestion CCG, que le réseau de distribution RDL est éclaté géographiquement puisque les noeuds d'insertion/extraction NIE qui le constituent sont présents à la fois dans les noeuds de concentration NCT et le centre de commutation et de gestion CCG.

On a représenté aux Figs 7a et 7b, sous formes d'hexagones, les les zones géographiques Zi couvertes par des bornes radio BRi adjacentes ainsi que les liaisons entre ces bornes radio BRi et des noeuds de concentration NCT A titre d'exemple, on a considéré des noeuds de concentration CTR reliés à quatre bornes BR On notera que la Fig. 7a montre un réseau de distribution RDL à trois segments alors que la Fig 7b montre un réseau de distribution RDL en boucle

Ces types de réseaux sont par exemple adaptés à la couverture de zones urbaines où le potentiel d'usagers est relativement homogène.

On a représenté aux Figs 8a et 8b, des zones géographiques Zi formant entre elles des régions linéaires respectivement pour un réseau de distribution RDL à un segment et pour un réseau de distribution RDL en boucle. Ces types de réseaux sont par exemple adaptés à la couverture de zones telles que des voies de circulation passant à l'intérieur de zones à faible potentiel.

On va maintenant décrire la gestion de la mobilité au cours des phases pendant lesquelles un mobile passe sous la couverture d'une borne BR à une autre borne BR Ces phases sont appelées dans le domaine de la technique les phases de "hand over"

Selon l'invention, la gestion de la mobilité est distribuée contrairement à des réseaux classiques dans lesquels elle est centralisée. Cette gestion de la mobilité consiste essentiellement, d'une part, en un dialogue entre l'ancienne borne BR et la nouvelle borne BR à laquelle est rattaché le mobile notamment pour l'échange des contextes radio et ATM relatifs à la communication en cours et, d'autre part, au marquage et effacement de marquage, par les bornes BR, des concentrateurs CTR auxquels elles sont reliées, comme cela a été expliqué précédemment.

Pour assurer ce dialogue, on a mis en place deux mécanismes. L'un est la mise en oeuvre d'un conduit commun diffusé et l'autre la mise en oeuvre d'un anneau virtuel partagé

On va expliciter la mise en oeuvre d'un conduit commun diffusé.

La requête émanant d'une borne BR via son concentrateur CTR remonte point à point vers l'équipement d'aiguillage PONT par un conduit unique identifié par un numéro de conduit VPI déterminé. La requête est donc émise avec l'identificateur VPI identifiant le conduit commun et avec un identificateur de canal virtuel VCI qui correspond au canal de signalisation alloué au mobile qui est entrain de passer d'une borne à une autre.

On notera que ce canal virtuel VCI porte les cellules de signalisation de la communication concernée et est attribué à ladite communication au moment de son établissement Il reste inchangé au cours de la communication.

L'équipement d'aiguillage PONT diffuse ensuite cette requête vers le réseau de distribution RDL ou les sous-réseaux formant le réseau de distribution RDL à l'ensemble des concentrateurs CTR. Ces derniers effectuent une fonction de filtrage de la requête sur la base de l'identificateur de canal virtuel VCI de signalisation. Le seul concentrateur CTR qui laisse passer la requête est celui dans lequel est déjà établie la connexion portant l'identificateur VCI de signalisation. En réalité, il y a deux concentrateurs CTR qui laisseront passer la requête: le concentrateur destinataire qui est celui auquel est rattachée l'ancienne borne BR mais aussi le concentrateur émetteur qui est celui auquel est rattachée la nouvelle borne BR On remarquera que la nouvelle borne reçoit en écho le message qu'elle a elle-même émise.

La procédure de réponse de l'ancienne borne BR vers la nouvelle est identique à celle qui vient d'être expliquée.

Les messages qui sont transmis par ce conduit commun sont par exemple portés par une unique cellule qui contient l'adresse du destinataire qui est identifiée par le numéro de VCI de signalisation ainsi que la nature de la fonction à effectuer ou de la requête formulée

On notera que le fait que le message émis par la borne BR émettrice porte un identificateur de canal virtuel VCI correspondant au canal de signalisation alloué au mobile lui permet d'atteindre l'ancienne borne BR sur laquelle il était attaché prédédemment car en phase de hand-over le canal support de la signalisation est établi à la fois sur la nouvelle et sur l'ancienne borne.

On notera encore que durant toute cette procédure de dialogue, seuls les processeurs des bornes BR ont sollicités, par opposition à une solution centralisée au niveau de l'équipement PONT qui nécessiterait qu'un unique processeur traite toutes les requêtes de hand-over en cours. Il en résulte qu'il est possible de traiter plus de requêtes à la fois puisque celles-ci peuvent être traitées simultanément.

Dans la méthode du conduit commun en anneau virtuel, il s'agit d'interconnecter 2 à 2 les concentrateurs au moyen de conduits virtuels VP établis dans le réseau de distribution RDL présentant une topologie en anneau virtuel. Les cellules ATM contenant les informations nécessaires aux dialogues entre les concentrateurs CTR et entre les bornes BR, via leurs concentrateurs CTR, circulent sur ce conduit virtuel VP jusqu'à trouver leur destinataire qui les retire ensuite du support. N'importe quel concentrateur CTR peut utiliser ce conduit en y insérant un message monocellule contenant l'adresse du destinataire (identifiée par l'identificateur de canal virtuel VCI de signalisation) et la nature de la fonction à effectuer ou de la requête formulée.

Si aucune bande passante n'est réservée, chaque concentrateur CTR accèdent au conduit commun en anneau en y insérant leurs messages avec le risque qu'ils soient perdus ou qu'ils provoquent la perte d'autres cellules dans le cas de surcharges sur des liens internes du réseau de distribution RDL.

Par contre, il est possible de réserver une bande minimale pour pouvoir effectuer le dialogue entre concentrateurs CTR et ceci, par exemple, au moyen d'un o.rgane gestionnaire OG relié à l'équipement d'aiguillage PONT.

Cette bande que se partagent les concentrateurs CTR leur garantit une qualité de service mesurée en taux de perte et délais de transfert. Elle assure en outre que les autres services ne seront pas affectés en cas de surcharges.

L'organe gestionnaire OG a pour fonction d'émettre sur le conduit commun VP un flux de cellules spécifiques, dites aussi cellules réservées, au débit correspondant à la bande à réserver. Ces cellules sont spécifiques de l'anneau et portent, pour ce faire, un identificateur de circuit virtuel VCI prédéterminé. Les concentrateurs CTR peuvent donc identifier ces cellules et les capturer pour émettre, à leur place, leurs messages sur le conduit en anneau virtuel VP. Ainsi, pour émettre un message, un concentrateur CTR attend l'arrivée d'une telle cellule réservée pour y insérer, à la place, une cellule de son message. Au contraire, lorsqu'il reçoit un message, le concentrateur CTR le remplace par une cellule réservée qu'un autre concentrateur CTR pourra capturer pour y émettre son message.

Comme dans le cas du conduit commun diffusé, le message émis est identifié par un couple d'identificateurs de conduit virtuel VPI attribué au canal commun et de canal virtuel VCI attribué au canal de signalisation du mobile concerné

L'inconvénient de l'option avec gestion des ressources est de nécessiter un traitement dans les concentrateurs CTR puisque ces derniers n'ont pas simplement à filtrer les messages sur la base des identicateurs numéros VCI. De plus, lorsqu'ils émettent un message sur l'anneau virtuel, les concentrateurs CTR doivent effectuer la substitution d'une cellule réservée par une cellule message. De même, lorsqu'ils capturent un message, ils doivent effectuer la substitution d'une cellule message par une cellule réservée. Ces traitements nécessitent un processeur ce qui a pour effet d'abaisser sensiblement les performances de cette technique

## Revendications

1. Réseau local d'accès à des mobiles, du type qui comporte un réseau de distribution (RDL) constitué d'une pluralité de noeuds (NIE), chaque noeud (NIE) étant relié à un concentrateur (CTR) auquel est reliée au moins une borne radio (BR) prévue pour communiquer avec des mobiles rattachés à ladite borne (BR), au moins un desdits noeuds (NIE) dudit réseau de distribution (RDL) étant relié, par l'intermédiaire d'un équipement d'aiguillage (PONT), à un commutateur de canaux virtuels (VCX), caractérisé en ce que chaque connexion virtuelle établie entre un mobile et ledit commutateur (VCX) est identifiée, pour toute la durée de la communication et quelle que soit la borne radio (BR) à laquelle est rattaché ledit mobile, par un unique identificateur de canal virtuel (VCI) pour les cellules usagers et un unique identificateur de canal virtuel (VCI) pour les cellules de signalisation, et en ce que, durant les phases de hand-over pendant lesquelles un mobile est rattaché à deux bornes (BR), lesdites deux bornes (BR) peuvent échanger des informations qui sont alors véhiculées par des cellules portant l'identificateur (VCI) du canal de signalisation alloué audit mobile

2. Réseau local d'accès à des mobiles selon la revendication 1, caractérisé en ce que lesdites informations qui sont transmises entre lesdites deux bornes pendant lesdites phases de hand-over sont véhiculées par des cellules portant l'identificateur (VCI) du canal de signalisation alloué audit mobile et un identificateur de conduit virtuel (VPI) correspondant à un conduit virtuel commun défini dans le réseau de distribution (RDL) selon une topologie de type point à point avec fusion dans le sens montant et point à multipoint avec diffusion dans le sens descendant.

3. Réseau local d'accès à des mobiles selon la revendication 1, caractérisé en ce que lesdites informations qui sont transmises entre lesdites deux bornes pendant lesdites phases de hand-over sont véhiculées par des cellules portant l'identificateur (VCI) du canal de signalisation alloué audit mobile et un identificateur de conduit virtuel (VPI) correspondant à un conduit virtuel commun défini dans le réseau de distribution (RDL) selon une topologie en anneau virtuel

4. Réseau local d'accès à des mobiles selon la revendication 3, caractérisé en ce que chaque concentrateur (CTR) accède audit anneau virtuel sans réservation de bande passante

5. Réseau local d'accès à des mobiles selon la revendication 3, caractérisé en ce que chaque concentrateur (CTR) accède audit anneau virtuel avec réservation de bande passante à une bande minimum

6. Réseau local d'accès à des mobiles selon la revendication 5, caractérisé en ce qu'il comporte un organe gestionnaire de la bande passante prévu pour émettre des cellules de réservation au débit correspondant à la bande à réserver, un concentrateur (CTR) pour émettre un message capturant une au moins desdites cellules et la ou les substituant par une ou plusieurs cellules contenant ledit message, un concentrateur (CTR) pour recevoir un message substituant la ou lesdites cellules contenant ledit message par une ou plusieurs cellules de réservation.

7. Réseau local d'accès à des mobiles selon une des revendications précédentes, caractérisé en ce que chaque connexion virtuelle établie pour une communication est en outre identifiée par un premier identificateur de conduit virtuel (VPI) lorsque ladite communication est locale et concerne donc deux mobiles rattachés à une ou des bornes (BR) dudit réseau et par un second identificateur de conduit virtuel (VPI) lorsque ladite communication est sortant ou entrante et concerne donc deux interlocuteurs dont l'un seulement est un mobile rattaché à une ou des bornes (BR) dudit réseau.

8. Réseau local d'accès à des mobiles selon une des revendications précédentes, caractérisé en ce que, durant les phases de hand-over, les deux bornes auxquelles est rattaché le mobile peuvent effectuer des marquages et effacer lesdits marquages dans les concentrateurs (CTR) auxquels elles sont respectivement reliées

9. Réseau local d'accès à des mobiles selon une des revendications précédentes, caractérisé en ce que des serveurs accessibles par des liaisons permanentes de type conduit virtuel (VP) sont interconnectés à l'équipement d'aiguillage (PONT).

10. Réseau local d'accès selon la revendication 8, caractérisé en ce que parmi lesdits serveurs, est prévu un serveur de macrodiversité (MD) actif sur chaque connexion virtuelle montante

11. Réseau local d'accès selon la revendication 8 ou 9, caractérisé en ce que parmi lesdits serveurs, est prévu un transcodeur (TRANS) effectuant un transcodage de format des cellules portant un identificateur de conduit virtuel identifiant une communication sortante ou entrante

12. Réseau local d'accès à des mobiles selon une des revendications précédentes, caractérisé en ce que lesdits noeuds (NIE) dudit réseau de distribution (RDL) sont reliés deux à deux de manière à former un anneau simple ou double contra-rotatif

13. Réseau local d'accès à des mobiles selon une des revendications 1 à 10, caractérisé en ce que lesdits noeuds (NIE) dudit réseau de distribution (RDL) sont arrangés en segments doubles contra-parallèles dont une des extrémités est reliée au commutateur de canaux virtuels (VCX).

14. Réseau local d'accès à des mobiles selon la revendication 12, caractérisé en ce qu'au moins un desdits segments comprend des sous-segments dont une des extrémités est reliée audit segment par l'intermédiaire d'un répéteur (REP).

15. Réseau local d'accès à des mobiles selon une des revendications précédentes, caractérisé en ce qu'il est constitué d'une pluralité de noeuds de concentration (NCT) et d'un centre de commutation et de gestion (CCG), chaque noeud de concentration (NCT) étant constitué d'un concentrateur (CTR) auquel peut être reliée une pluralité de bornes radio (BR) et un noeud (NIE) relié audit concentrateur (CTR), ledit noeud (NIE) étant un noeud du réseau de distribution (RDL), ledit centre de commutation et de gestion (CCG) comprenant ledit équipement d'aiguillage (PONT), ledit commutateur (VCX) et au moins un noeud (NIE) du réseau de distribution (RDL).

16. Réseau local d'accès à des mobiles selon la revendication 14, caractérisé en ce que ledit centre de commutation et de gestion (CCG) comprend en outre au moins un serveur.

## Patentansprüche

1. Lokales Anschaltenetz an Mobiltelefone, mit einem Verteilungsnetz (RDL), das von einer Vielzahl von Knoten (NIE) gebildet wird, wobei jeder Knoten (NIE) mit einem Konzentrator (CTR) verbunden ist, an den mindestens eine Funkklemme (BR) angeschlossen ist, die dazu vorgesehen ist, mit an diese Klemme (BR) angeschlossenen Mobiltelefonen zu kommunizieren, wobei mindestens einer der Knoten (NIE) des Verteilungsnetzes (PONT) über eine Verzweigungseinrichtung mit einem virtuellen Kanalumschalter (VCX) verbunden ist, **dadurch gekennzeichnet,** daß jeder virtuelle Anschluß, der zwischen einem Mobiltelefon und dem Umschalter (VCX) hergestellt wird, für die gesamte Dauer der Kommunikation und unabhängig von der Funkklemme (BR), an die das Mobiltelefon angeschlossen ist, durch einen einzigen virtuellen Kanalidentifikator (VCI) für die Benutzerzellen und einen einzigen virtuellen Kanalidentifikator (VCI) für die Anzeigezellen identifiziert wird, und daß während der Hand-Over-Phasen, während derer ein Mobiltelefon an zwei Klemmen (BR) angeschlossen ist, die beiden Klemmen (BR) Informationen austauschen können, die nun von den Zellen, die den Identifikator (VCI) des von dem Mobiltelefon verwendeten Anzeigekanals tragen, weitergeleitet werden.

2. Lokales Anschaltenetz an Mobiltelefone nach Anspruch 1, **dadurch gekennzeichnet,** daß die Informationen, die während der Hand-Over-Phasen zwischen den beiden Klemmen übertragen werden, von Zellen weitergeleitet werden, die den Identifikator (VCI) des von dem Mobiltelefon verwendeten Anzeigekanals und einen virtuellen Leitungsidentifikator (VPI) tragen, der einer gemeinsamen virtuellen Leitung entspricht, die in dem Verteilungsnetz (RDL) nach einer Topologie vom Typ Punkt-zu-Punkt mit Zusammenführung in aufsteigender Richtung und Punkt-zu-Mehrfachpunkt mit Ausbreitung in absteigender Richtung definiert ist.

3. Lokales Anschaltenetz an Mobiltelefone nach Anspruch 1, **dadurch gekennzeichnet,** daß die Informationen, die während der sogenannten Hand-Over-Phasen zwischen den beiden Klemmen übertragen werden, von Zellen weitergeleitet werden, die den Identifikator (VCI) des von dem Mobiltelefon verwendeten Anzeigekanals und einen virtuellen Leitungsidentifikator (VPI) tragen, der einer gemeinsamen virtuellen Leitung entspricht, die in dem Verteilungsnetz (RDL) nach einer Topologie im virtuellen Ring definiert ist.

4. Lokales Anschaltenetz an Mobiltelefone nach Anspruch 3, **dadurch gekennzeichnet,** daß jeder Konzentrator (CTR) ohne Reservierung eines Durchlaßbereichs Zugriff auf den virtuellen Ring hat.

5. Lokales Anschaltenetz an Mobiltelefone nach Anspruch 3, **dadurch gekennzeichnet,** daß jeder Konzentrator (CTR) mit Reservierung eines Durchlaßbereichs mit einem Minimalbereich Zugriff auf den virtuellen Ring hat.

6. Lokales Anschaltenetz an Mobiltelefone nach Anspruch 5, **dadurch gekennzeichnet,** daß es ein Element zur Verwaltung des vorgesehenen Durchlaßbereichs für die Entsendung von Reservierungszellen mit der dem zu reservierenden Bereich entsprechenden Durchlaßmenge, einen Konzentrator (CTR) für die Entsendung einer Meldung, die mindestens eine der Zellen erfaßt und sie durch eine oder mehrere Zellen ersetzt, die diese Meldungen enthalten, umfaßt, wobei ein Konzentrator (CTR) für den Empfang einer Meldung die Zelle(n), die die Meldung enthält (enthalten), durch eine oder mehrere Reservierungszellen ersetzt.

7. Lokales Anschaltenetz an Mobiltelefone nach einem der vorhergehenden Ansprüche, **dadurch gekennzeichnet,** daß jeder virtuelle Anschluß, der für eine Kommunikation hergestellt wird, ferner durch einen ersten virtuellen Leitungsidentifikator (VPI) identifiziert wird, wenn die Kommunikation lokal ist und somit zwei an eine oder mehrere Klemmen (BR) des Netzes angeschlossene Mobiltelefone betrifft, und durch einen zweiten virtuellen Leitungsidentifikator (VPI), wenn die Kommunikation ausgehend oder eingehend ist und somit zwei Gesprächspartner betrifft, von denen nur einer ein Mobiltelefon ist, das an eine oder mehrere Klemmen (BR) des Netzes angeschlossen ist.

8. Lokales Anschaltenetz an Mobiltelefone nach einem der vorhergehenden Ansprüche, **dadurch gekennzeichnet,** daß die beiden Klemmen, an die das Mobiltelefon angeschlossen ist, während der Hand-Over-Phasen Markierungen durchführen und diese Markierungen in den Konzentratoren (CTR), an die sie jeweils angeschlossen sind, löschen können.

9. Lokales Anschaltenetz an Mobiltelefone nach einem der vorhergehenden Ansprüche, **dadurch gekennzeichnet,** daß von den permanenten Verbindungen vom Typ einer virtuellen Leitung (VP) zugängliche Server an die Verzweigungseinrichtung (PONT) angeschlossen sind.

10. Lokales Anschaltenetz nach Anspruch 8, **dadurch gekennzeichnet,** daß unter diesen Servern ein aktiver Makrodiversity-Server (MD) auf jeder ansteigenden virtuellen Leitung vorgesehen ist.

11. Lokales Anschaltenetz an Mobiltelefone nach Anspruch 8 oder 9, **dadurch gekennzeichnet,** daß unter diesen Servern ein Code-Umsetzer (TRANS) vorgesehen ist, der ein Umcodieren des Formats der Zellen vornimmt, die einen virtuellen Leitungsidentifikator tragen, welcher eine ausgehende oder eingehende Kommunikation identifiziert.

12. Lokales Anschaltenetz an Mobiltelefone nach einem der vorhergehenden Ansprüche, **dadurch gekennzeichnet,** daß die Knoten (NIE) dieses Verteilungsnetzes (RDL) paarweise miteinander verbunden sind, um einen gegenläufigen einfachen oder doppelten Ring zu bilden.

13. Lokales Anschaltenetz an Mobiltelefone nach einem der Ansprüche 1 bis 10, **dadurch gekennzeichnet,** daß die Knoten (NIE) des Verteilungsnetzes (RDL) in doppelten gegenparallelen Segmenten angeordnet sind, von denen eines der Enden mit dem virtuellen Kanalumschalter (VCX) verbunden ist.

14. Lokales Anschaltenetz an Mobiltelefone nach Anspruch 12, **dadurch gekennzeichnet,** daß mindestens eines dieser Segmente Untersegmente umfaßt, von denen eines der Enden mit dem Segment über einen Verstärker (REP) verbunden ist.

15. Lokales Anschaltenetz an Mobiltelefone nach einem der vorhergehenden Ansprüche, **dadurch gekennzeichnet,** daß es eine Vielzahl von Konzentrationsknoten (NCT) und ein Umschalt- und Verwaltungszentrum (CCG) umfaßt, wobei jeder Konzentrationsknoten (NCT) von einem Konzentrator (CTR) gebildet wird, an den eine Vielzahl von Funkklemmen (BR) und ein mit dem Konzentrator (CTR) verbundener Knoten (NIE) angeschlossen sein können, wobei der Knoten (NIE) ein Knoten des Verteilungsnetzes (RDL) ist, wobei das Umschalt- und Verwaltungszentrum (CCG) die Verzweigungseinrichtung (PONT), den Umschalter (VCX) und mindestens einen Knoten (NIE) des Verteilungsnetzes (RDL) umfaßt.

16. Lokales Anschaltenetz an Mobiltelefone nach Anspruch 14, **dadurch gekennzeichnet,** daß das Umschalt- und Verwaltungszentrum (CCG) ferner mindestens einen Server umfaßt.

## Claims

1. Local access network for mobiles, of the type which comprises a distribution network (RDL) made up of a plurality of nodes (NIE), each node (ME) being linked to a concentrator (CTR) to which is linked at least one radio terminal (BR). provided to communicate with mobiles linked to said terminal (BR), at least one of said nodes (NIE) of said distribution network (RDL) being linked, via switching equipment (PONT) to a selector switch of virtual channels (VCX), **characterised in that** each virtual connection established between a mobile and said selector switch (VCX) is identified, for the whole duration of the communication and whatever the radio terminal (BR) to which said mobile is linked, by a unique virtual channel identifier (VCI) for the user cells and a unique virtual channel identifier (VCI) for the signalling cells, and in that, during the handover phases in which a mobile is linked to two terminals (BR), said two terminals (BR) can exchange data which is then carried by cells bearing the identifier (VCI) of the signalling channel allotted to said mobile.

2. Local access network for mobiles according to claim 1, characterised in that said data which is transmitted between said two terminals during said handover phases is carried by cells bearing the identifier (VCI) of the signalling channel allotted to said mobile and a virtual path identifier (VPI) corresponding to a common virtual path defined in the distribution network (RDL) according to a topology of the point-to-point type with merging in the upward direction and point-to-multipoint with diffusion in the downward direction.

3. Local access network for mobiles according to claim 1, **characterised in that** said data which is transmitted between said two terminals during said handover phases is carried by cells bearing the identifier (VCI) of the signalling channel allotted to said mobile and a virtual path identifier (VPI) corresponding to a common virtual path defined in the distribution network (RDL) according to a virtual ring topology.

4. Local access network for mobiles according to claim 3, **characterised in that** each concentrator (CTR) accesses said virtual ring without booking a pass band.

5. Local access network for mobiles according to claim 3, **characterised in that** each concentrator (CTR) accesses said virtual ring with booking of a pass band at a minimum band

6. Local access network for mobiles according to claim 5, **characterised in that** it comprises a management unit of the pass band provided to send booking cells to the throughput corresponding to the band to be booked, a concentrator (CTR) to send a message picking up at least one of said cells and substituting it or them by one or more cells containing said message, a concentrator (CTR) to receive a message substituting said cell(s) containing said message by one or more booking cells.

7. Local access network for mobiles according to one of the previous claims, **characterised in that** each virtual connection established for a communication is moreover identified by a first virtual path identifier (VPI) when said communication is local and therefore relates to two mobiles linked to one or more terminals (BR) of said network and by a second virtual path identifier (VPI) when said communication is outgoing or incoming and therefore relates to two speakers of which only one is a mobile linked to one or more terminals (BR) of said network.

8. Local access network for mobiles according to one of the previous claims, **characterised in that** during the handover phases the two terminals to which the mobile is connected can carry out markings and erase said markings in the concentrators (CTR) to which they are respectively linked.

9. Local access network for mobiles according to one of the previous claims, **characterised in that** the servers which can be accessed by permanent links of the virtual path (VP) type are interconnected with the switching equipment (PONT).

10. Local access network according to claim 8, **characterised in that** amongst the said servers, a macrodiversity server (MD) is provided acting on each upward virtual connection.

11. Local access network according to claim 8 or 9, **characterised in that** amongst said servers a transcoder (TRANS) is provided carrying out format transcoding of cells bearing a virtual path identifier identifying an outgoing or incoming communication.

12. Local access network for mobiles according to one of the previous claims **characterised in that** said nodes (NIE) of said distribution network (RDL) are linked two by two in order to form a single or double contra-rotating ring.

13. Local access network for mobiles according to one of claims 1 to 10, **characterised in that** said nodes (NIE) of said distribution network (RDL) are laid out in contra-parallel double segments, one end of which is linked to the selector switch of virtual channels (VCX).

14. Local access network for mobiles according to claim 12, **characterised in that** at least one of said segments comprises sub-segments, one end of which is linked to said segment via a repeater (REP).

15. Local access network for mobiles according to one of the previous claims, **characterised in that** it is made up of a plurality of concentration nodes (NCT) and of a switching and management centre (CCG), each concentration node (NCT) being made up of a concentrator (CTR) to which can be linked a plurality of radio terminals (BR) and a node (NIE) linked to said concentrator (CTR), said node being a node of a distribution network (RDL), said switching and management centre (CCG) comprising said switching equipment (FONT), said selector switch (VCX) and at least one node (NIE) of the distribution network (RDL).

16. Local access network for mobiles according to claim 14, **characterised in that** said switching and management centre (CCG) comprises in addition at least one server.
